# EUROPEAN PATENT SPECIFICATION

(11) **EP 0 655 426 B1**
(45) Date of publication and mention of the grant of the patent: **13.08.1997**
(21) Application number: 94118502.7
(22) Date of filing: 24.11.1994
(51) Int. Cl.: C03C 14/00

(54) **Glass-ceramic composite and process for producing the same**
Glas-Keramik-Verbundwerkstoff und Verfahren zu dessen Herstellung
Composite de verre et céramique et procédé pour sa production

(30) Priority: 25.11.1993 JP 295207/93
(43) Date of publication of application: 31.05.1995
(73) Proprietor: SUMITOMO ELECTRIC INDUSTRIES, LTD., Osaka-shi, Osaka 541 (JP)
(72) Inventor: Nakahata, Seiji, c/o Itami Works of, Itami-shi, Hyogo (JP); Sogabe, Kouichi, c/o Itami Works of, Itami-shi, Hyogo (JP); Yamakawa, Akira, c/o Itami Works of, Itami-shi, Hyogo (JP)
(74) Representative: Fiener, Josef

(56) References cited:
- EP-A- 0 239 263
- EP-A- 0 424 220
- EP-A- 0 499 865
- CHEMICAL ABSTRACTS, vol. 108, no. 12, 21 March 1988, Columbus, Ohio, US; abstract no. 99906h, page 347 ;
- JOURNAL OF THE AMERICAN CERAMIC SOCIETY., vol.73, no.6, June 1990, COLUMBUS US pages 1606 - 1612 M.K.CINIBULK ET AL. 'Grain-Boundary-Phase Crystallisation and Strength of Silicon Nitride Sintered with a YSiAlON Glass.'

## Description

### BACKGROUND OF THE INVENTION

### 1. Field of the Invention

The present invention relates to a glass-ceramic composite suitable as a substrate material for mounting thereon semiconductor elements, and a process for producing the same.

### 2. Description of the Prior Art

In order to cope with the trend toward higher-speed, higher-density and reduced-size information and communication equipments, substrate materials for mounting thereon semiconductor elements are required to have the following characteristics.
1. The temperature of sintering a substrate material is at most 1,200°C. This enables a low-resistance metallic material such as gold, silver or copper to be used as a conductive material in wiring, whereby the speed-up of signal transmission can be achieved.
2. The dielectric constant is at most 7. The speed-up of signal transmission can be achieved by forming the circumference of a wiring from a material having a low dielectric constant.
3. The mechanical strength is at least 20 kg/mm². This can make the substrate material thin enough to miniaturize a semiconductor element device, while preventing chipping and cracking of the substrate material, e.g., in the course of production of such a device to improve the yield thereof, thus enabling the product to be provided at a low cost.
4. The thermal conductivity is at least 20 W/m·K. This allows efficient dissipation of heat generated by semiconductor elements. This in turn allows high-density mounting of semiconductor elements, thus enabling miniaturization of a device.
5. The peel strength is at least 1 kg /mm². This enables wirings of gold or the like to be stably metallized on a substrate.

However, the conventional multi-layer substrate materials have not satisfied the foregoing characteristics required thereof. For example, ceramic materials such as alumina and aluminum nitride are those sintered at a temperature of at least 1,600°C and have a dielectric constant of at least 8 to 9, thus failing to satisfy the above-mentioned characteristics 1 and 3. Crystallized glasses such as cordierite (2MgO·2Al₂O₃·SiO₂), composite glass materials of a crystallized glass with an amorphous glass such as borosilicate glass, and oxide ceramic-glass composite materials such as aluminum oxide-borosilicate glass have a mechanical strength of as low as 10 to 20 kg/mm² and a thermal conductivity of as low as around 5 W/m·K, thus failing to satisfy the above-mentioned characteristics 2 and 4. Further, they can provide only substrates low in adhesion to wirings and hence low in peel strength therebetween because the substrates made thereof have a high moisture absorptivity and contain impurity elements such as fluorine.

Chemical Abstracts, Vol. 108 (1988), No. 12, Abstract No. 99906h (= JP-A-62/279938) describes composite materials consisting of aluminum nitride ceramic particles (e. g. 33 vol.%) in an oxynitride glass matrix (e. g. CaSiAlON).

Journal of the American Ceramic Society, Vol. 73, No. 6, 1990, pages 1606 - 1612, refers to densifying silicon nitride with a glass additive and describes (see page 1606, right column, last paragraph - page 1607, left column, first paragraph) a composite material obtained by sintering silicon nitride particles with 5 - 20 wt.% of oxynitride glass (YSiAlON) at 1800 - 1900°C.

EP-A-239263 (see page 3, lines 5 - 18; page 8, lines 24 - 28) describes a composite material obtained by blending nitrogen doped cordierite glass with 5 - 50 % silicon nitride whiskers (particles).

None of these prior art documents gives information on the purity of the nitride ceramic or the amount of impurities therein.

### SUMMARY OF THE INVENTION

An object of the present invention is to provide a substrate material for mounting thereon semiconductor elements which material has a low sintering temperature, a low dielectric constant, a high thermal conductivity and enhanced mechanical strength while securing a high peel strength and a high reliability.

In accordance with a first aspect of the present invention, there is provided a glass-ceramic composite as defined in claim 1.

It is desirable that the nitride ceramic be aluminum nitride and/or silicon nitride, the total amount of which is 20 to 90 wt. % based on the weight of the glass-ceramic composite.

On the other hand, as the glass material, there can be mentioned oxynitride glasses containing 0.1 to 10 wt. % of nitrogen and prepared by incorporating nitrogen either into borosilicate glass comprising SiO₂ and B₂O₃ as the main components or into borosilicate glass admixed with Pb, Zn, Na, Fe, etc.

Such a material is preferably sintered at a temperature of at most 1,200°C, and has a dielectric constant of at most 7, a mechanical strength of at least 20 kg/mm², and a thermal conductivity of at least 20 W/m·K.

In accordance with a second aspect of the present invention, there is provided a process for producing the aforesaid glass-ceramic composite, the process comprising the features of claim 4.

### DETAILED DESCRIPTION OF THE PREFERRED EMBODIMENTS

In the glass-ceramic composite according to the present invention, when the content of nitrogen in the oxynitride glass is smaller than 0.1 wt. %, a reaction thereof with the nitride ceramic proceeds. On the other hand, when it exceeds 10 wt. %, the viscous flow of the glass is suppressed, resulting in insufficient sintering. Thus, the nitrogen content is set at 0.1 to 10 wt. %. Further, when the amount of the nitride ceramic is smaller than 20 wt. %, the features of the nitride ceramic may not sufficiently be manifested. On the other hand, when it exceeds 90 wt. %, the low-temperature sinterability of the glass is lost, resulting in insufficient sintering.

If an oxide glass comprising SiO₂ and B₂O₃ as the main components and a nitride ceramic are merely mixed and sintered together, evaporation of the moisture contained in the glass and evolution of gases such as CO, N₂ and NH₃ through a reaction of the nitride ceramic with oxygen contained in the glass occur during sintering to cause foaming of the resulting sintered body, and the features of the nitride ceramic are lost through conversion of the ceramic to oxides to lower the strength and thermal conductivity of the sintered body. Further, elements such as sulfur and fluorine that are contained in the starting ceramic powder lower the mechanical strength and peel strength of the sintered body.

In view of the above, the inventors of the present invention have made a large number of tests and, as a result, have completed the aforementioned second aspect of the present invention by employing the step of incorporating elementary nitrogen into the starting oxide glass powder and the step of washing or boiling the starting nitride ceramic powder with water of 5 to 10 in pH to remove powder-surface impurities, such as sulfur, fluorine and NH₃, present on the surfaces of the starting nitride ceramic powder to enable a material having a high thermal conductivity, a high strength, a low dielectric constant and a high peel strength to be provided through sintering at a temperature of 800 to 1,200°C.

The above-mentioned two steps will now be described.
(1) Step of incorporating elementary nitrogen into starting oxide glass powder:
   The starting oxide glass powder is treated in an atmosphere of nitrogen at a temperature of 300 to 800°C to incorporate 0.1 to 10 wt. % of elementary nitrogen into the glass powder. The resulting oxynitride glass can suppress a reaction thereof with the nitride ceramic to enable manifestation of the characteristics of the nitride ceramic, i.e., a high strength and a high thermal conductivity. Furthermore, nitriding the oxide glass can decrease the moisture absorption of the glass-ceramic composite to enhance the peel strength thereof. The reasons for restricting the nitrogen content are the same as described in connection with the first aspect of the present invention.
(2) Step of washing or boiling starting nitride ceramic powder:
   Since the presence of elementary sulfur and fluorine in the nitride ceramic entails a decrease in peel strength, the content thereof must be set at at most 1,000 ppm. Further, since the presence of carbon and sulfur causes evolution of gases such as CO, CO₂ SO and SO₂ causative of pore formation to entail decreases in mechanical strength and thermal conductivity, the carbon content must be set at at most 1,000 ppm, while the sulfur content must be set at at most 100 ppm. Formation of oxide layers on the surface of the starting nitride ceramic powder can improve the wettability thereof with the glass and hence the sinterability of both, and can further prevent solid solution of the glass component into the crystal particles of the nitride ceramic to allow manifestation of the features of the nitride ceramic. When the content of oxygen in the nitride ceramic crystal particles exceeds 1 wt. %, however, the thermal conductivity of the resulting sintered body is lower than 20 W/m·K. Thus, it must be at most 1 wt. %.

When the starting nitride ceramic powder is washed with or boiled in water of 5 to 10 in pH, the fluorine, carbon and sulfur present on the surface of the powder can be removed with formation thereon of oxide layers to provide a composite endowed with desired properties. The amount of the starting nitride ceramic powder is desirably 20 to 90 wt. % just as described in connection with the first aspect of the present invention. Further, as for the limitation of pH to the range of 5 to 10, washing with or boiling in water having a pH lower than 5 or higher than 10 causes the particles of the starting nitride ceramic powder to be oxidized unnecessarily highly, thus increasing the content of oxygen in the nitride ceramic crystal particles to more than 1 wt. %. Thus, the pH is desirably 5 to 10.

The composite obtained according to the foregoing process has a thermal conductivity of at least 20 W/m·K, a mechanical strength of at least 20 kg/mm², a dielectric constant of at most 7, and a peel strength of at least 1 kgf/mm² to well satisfy the characteristics required of a multi-layer substrate material.

The following Examples will now illustrate the present invention in comparison with Comparative Examples.

### Example 1:

An oxide glass powder comprising SiO₂ and B₂O₃ as main components was nitrided in a stream of nitrogen at 600°C for 2 hours to obtain an oxynitride glass powder containing elementary nitrogen. The oxynitride glass powder thus obtained was then admixed with 60 wt. % of a starting silicon nitride powder (average particle size: 0.5 µm) washed with a stream of water of 7 in pH for 30 minutes and 5 wt. % of an acrylic binder. The resulting mixture was ball-milled in an alcohol for 10 hours. The resulting slurry was dried, molded, and then sintered in a stream of nitrogen at 1,000°C for 3 hours to produce a sintered body. The properties (mechanical strength, thermal conductivity, dielectric constant, and peel strength) of the sintered body were examined. The results are shown in Table 1. The mechanical strength, thermal conductivity, and dielectric constant of the sintered body were measured at room temperature according to the three-point flexural test, the laser flash method, and the three-electrode method (1 MHz), respectively.

### Examples 2 to 10:

A starting oxide glass powder comprising SiO₂ and B₂O₃ as main components and each starting ceramic powder were respectively treated under the conditions as specified in Table 1, and then mixed together, molded and sintered in substantially the same manner as in Example 1, followed by examination of the properties of the resulting sintered body. The results are shown in Table 1.

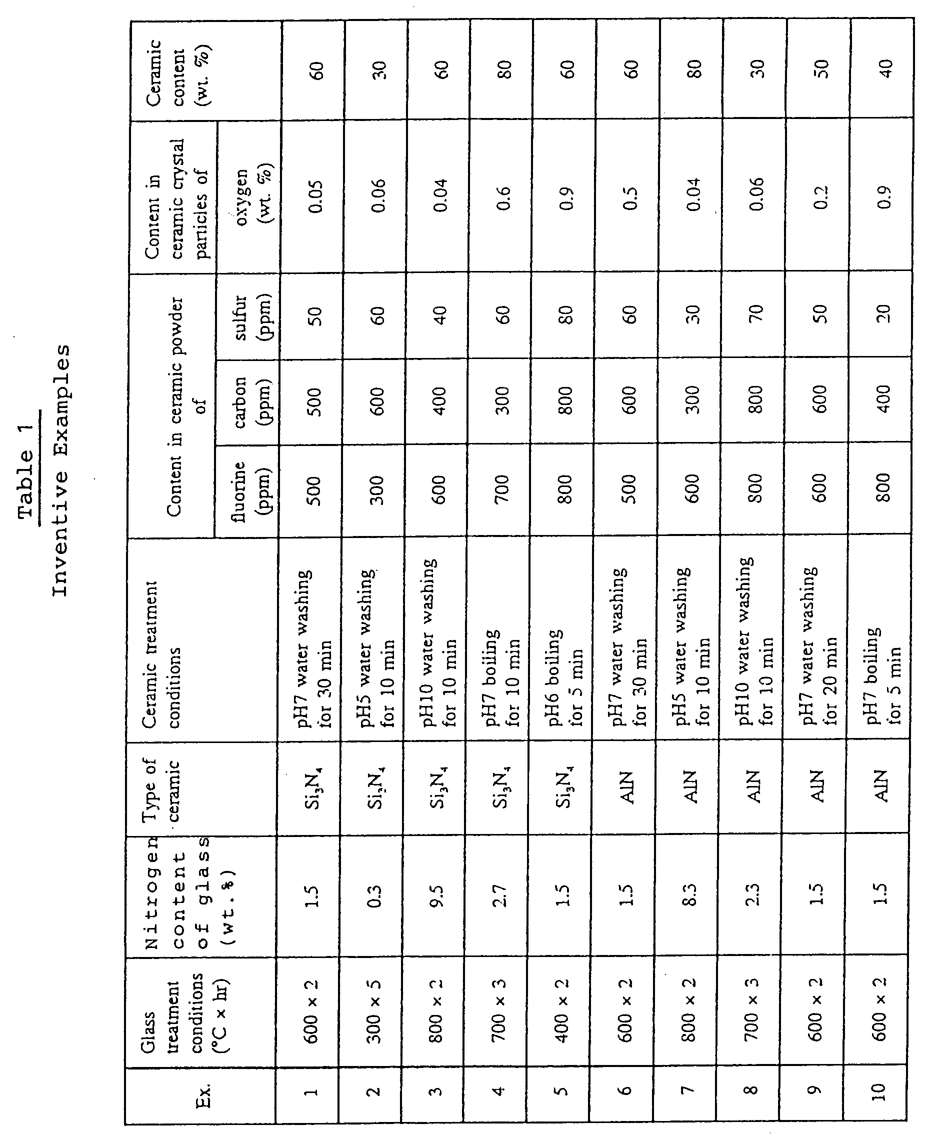

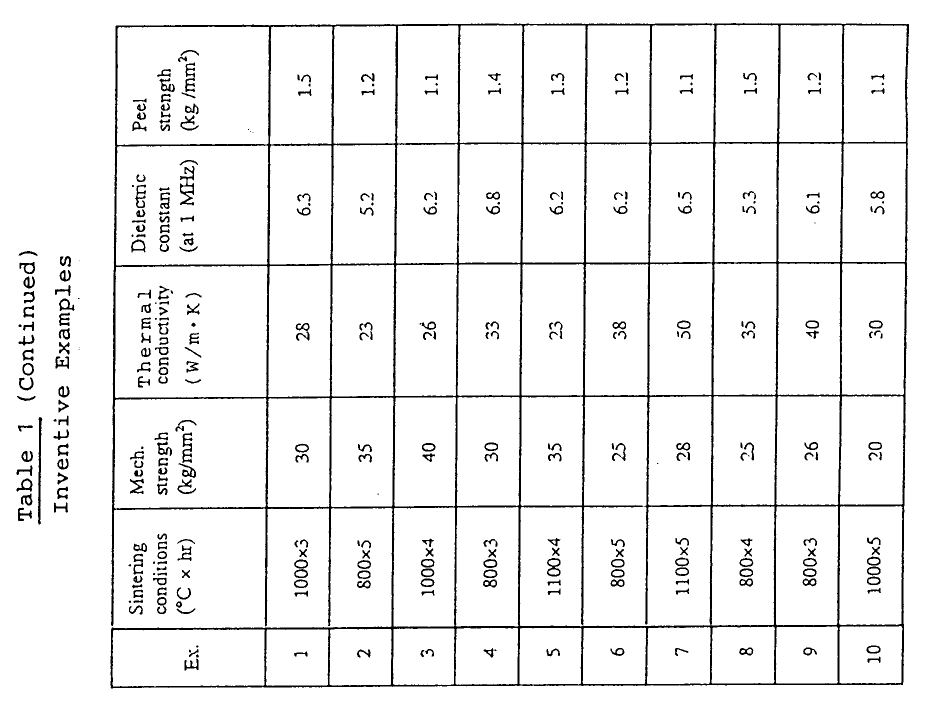

### Comparative Examples 1 to 8

A starting oxide glass powder comprising SiO₂ and B₂O₃ as main components and each starting ceramic powder as specified in Table 2 were treated, and then mixed, molded and sintered in the same manner as in Example 1, followed by examination of the properties of the resulting sintered body. The results are shown in Table 2.

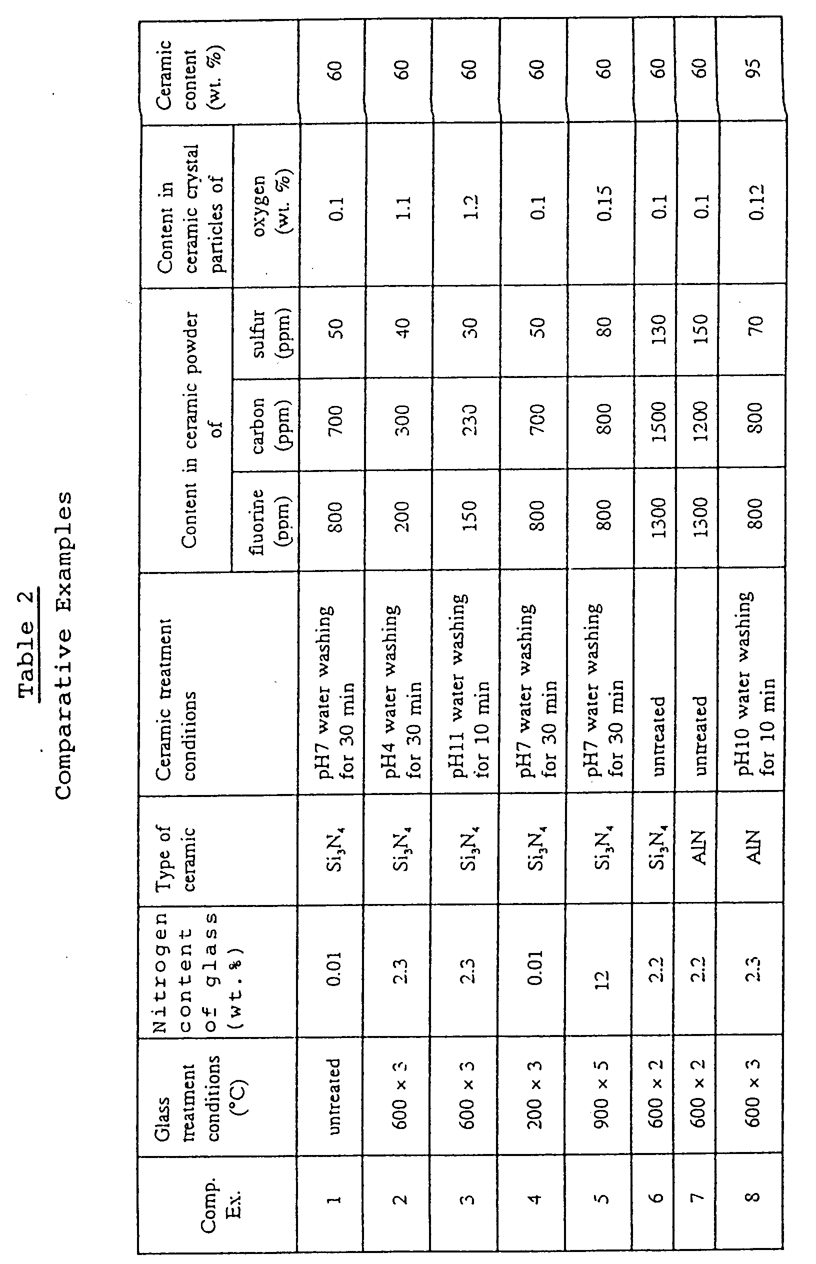

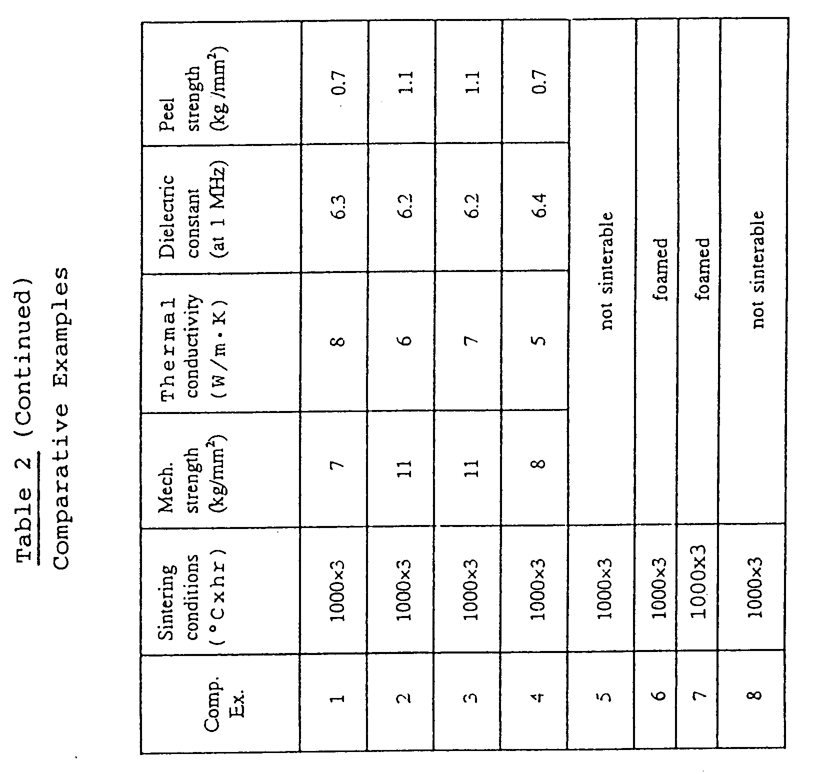

As is apparent from the comparison of the foregoing Examples with the foregoing Comparative Examples, mixing the nitride oxynitride glass powder with the nitride ceramic washed with or boiled in water of 5 to 10 in pH according to the present invention enables the sintering thereof to be effected at a low temperature to produce a material having a high strength, a high thermal conductivity and a low dielectric constant.

According to the present invention, there can be provided a composite sintered at a low temperature, and having a high strength, a high thermal conductivity, a low dielectric constant, and a high peel strength. This material well satisfies the characteristics required of a substrate material for mounting thereon semiconductor elements.

## Claims

1. A glass-ceramic composite comprising an oxynitride glass containing 0.1 to 10 wt. % of nitrogen and nitride ceramic particles dispersed therein, wherein the nitride ceramic particles are formed from a starting nitride ceramic powder being controlled in contents of impurities as follows:
- fluorine: up to 1000 ppm
- carbon : up to 1000 ppm
- sulfur : up to 100 ppm.

2. A glass-ceramic composite as claimed in claim 1, wherein the ceramic dispersed in the oxynitride glass is aluminum nitride and/or silicon nitride, the total amount of which is 20 to 90 wt. % based on the weight of the glass-ceramic composite.

3. A glass-ceramic composite as claimed in claim 2, which is one sintered at a temperature of at most 1,200°C, and has a dielectric constant of at most 7, a mechanical strength of at least 20 kg/mm², and a thermal conductivity of at least 20 W/m·K.

4. A process for producing a glass-ceramic composite, comprising sintering a molded body having a given shape at a temperature of 800 to 1,200°C, said molded body comprising a mixture of an oxynitride glass powder containing 0.1 to 10 wt. % of elementary nitrogen incorporated thereinto by treating a starting oxide glass powder in an atmosphere of nitrogen at a temperature of 300 to 800°C with a nitride ceramic powder washed with or boiled in water of 5 to 10 in pH, wherein the nitride ceramic powder is controlled in contents of impurities as follows:
- fluorine: up to 1000 ppm
- carbon : up to 1000 ppm
- sulfur : up to 100 ppm.

## Patentansprüche

1. Glas-Keramik-Verbundwerkstoff, umfassend ein Oxynitridglas, das 0,1 - 10 Gew.-% Stickstoff enthält, und darin dispergierte Nitridkeramikteilchen, wobei die Nitridkeramikteilchen von einem Ausgangsnitridkeramikpulver hergestellt werden, deren Gehalte von Verunreinigungen wie folgt eingestellt werden:
- Fluor : bis zu 1.000 ppm
- Kohlenstoff : bis zu 1.000 ppm
- Schwefel : bis zu 100 ppm.

2. Glas-Keramik-Verbundwerkstoff nach Anspruch 1, wobei die im Oxynitridglas dispergierte Keramik Aluminiumnitrid und/oder Siliciumnitrid ist, wobei die Gesamtmenge von diesen 20 - 90 Gew.-% beträgt, bezogen auf das Gewicht des Glas-Keramik-Verbundwerkstoffs.

3. Glas-Keramik-Verbundwerkstoff nach Anspruch 2, der bei einer Temperatur von höchstens 1.200°C gesintert wird und der eine Dielektrizitätskonstante von höchstens 7, eine mechanische Festigkeit von mindestens 20 kg/mm² und eine thermische Leitfähigkeit von mindestens 20 W/m·K aufweist.

4. Verfahren zur Herstellung eines Glas-Keramik-Verbundwerkstoffs, umfassend das Sintern eines geformten Körpers mit einer vorgegebenen Gestalt bei einer Temperatur von 800 - 1.200°C, wobei der geformte Körper ein Gemisch eines Oxynitridglaspulvers umfaßt, das 0,1 - 10 Gew.-% elementaren Stickstoffs enthält, der durch Behandeln eines Ausgangsoxidglaspulvers in einer Stickstoffatmosphäre bei einer Temperatur von 300 - 800°C mit einem Nitridkeramikpulver darin inkorporiert wird, das mit Wasser mit einem pH-Wert von 5 bis 10 gewaschen oder gekocht wird, wobei das Nitridkeramikpulver in den Gehalten von Verunreinigungen wie folgt eingestellt wird:
- Fluor : bis zu 1.000 ppm
- Kohlenstoff : bis zu 1.000 ppm
- Schwefel : bis zu 100 ppm.

## Revendications

1. Composite verre-céramique comprenant un verre d'oxynitrure contenant 0,1 à 10 % en masse d'azote et des particules de céramique nitrure dispersées à l'intérieur, dans lequel les particules de céramique nitrure sont formées à partir d'une poudre de céramique nitrure initiale dont les teneurs en impuretés sont contrôlées de la manière suivante :
- fluor : jusqu'à 1 000 ppm
- carbone : jusqu'à 1 000 ppm
- soufre : jusqu'à 100 ppm.

2. Composite verre-céramique selon la revendication 1, dans lequel la céramique dispersée dans le verre d'oxynitrure est du nitrure d'aluminium et/ou du nitrure de silicium, dont la quantité totale est de 20 à 90 % en masse par rapport à la masse du composite verre-céramique.

3. Composite verre-céramique selon la revendication 2 qui est un composite verre-céramique fritté à une température d'au plus 1 200°C et qui a une constante diélectrique d'au plus 7, une résistance mécanique d'au moins 20 kg/mm² et une conductivité thermique d'au moins 20 W/m.K.

4. Procédé de production d'un composite verre-céramique comprenant le frittage d'un corps moulé ayant une forme donnée à une température de 800 à 1 200°C, ledit corps moulé comprenant un mélange d'une poudre de verre d'oxynitrure contenant 0,1 à 10 % en masse d'azote élémentaire incorporé à l'intérieur par traitement d'une poudre de verre d'oxyde initiale dans une atmosphère d'azote à une température de 300 à 800°C avec une poudre de céramique nitrure lavée avec ou portée à ébullition dans de l'eau d'un pH de 5 à 10, dans lequel les teneurs en impuretés de la poudre de céramique nitrure sont contrôlées de la manière suivante :
- fluor : jusqu'à 1 000 ppm
- carbone : jusqu'à 1 000 ppm
- soufre : jusqu'à 100 ppm.
